(19) Europäisches Patentamt
European Patent Office
Office européen des brevets

(11) **EP 4 394 799 A1**

(12) **EUROPEAN PATENT APPLICATION**

(43) Date of publication:
**03.07.2024 Bulletin 2024/27**

(21) Application number: **22217136.5**

(22) Date of filing: **29.12.2022**

(51) International Patent Classification (IPC):
***G21B 1/05*** *(2006.01)*   ***G21B 1/11*** *(2006.01)*
***H05H 1/11*** *(2006.01)*   *H01F 6/06* *(2006.01)*

(52) Cooperative Patent Classification (CPC):
**G21B 1/05; G21B 1/11; H05H 1/10;** H01F 6/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Novatron Fusion Group AB
163 47 Spånga (SE)**

(72) Inventor: **JÄDERBERG, Jan
163 47 Spånga (SE)**

(74) Representative: **AWA Sweden AB
Box 5117
200 71 Malmö (SE)**

(54) **MAGNETIC MIRROR MACHINE**

(57)   A magnetic mirror machine (200), comprises a first inner coil (104) arranged to carry a current in a first direction; and a second inner coil (105) offset in an axial direction from said first inner coil (104) and arranged to carry a current in a second direction opposite to said first direction. The mirror machine (200) further comprises a first outer coil (210) located radially outside said first inner coil (104) and arranged to carry a current in said second direction; and a second outer coil (212) located radially outside said second inner coil (105) and arranged to carry a current in said first direction.

Fig. 2

EP 4 394 799 A1

## Description

Field of technology

The present disclosure relates to a magnetic mirror machine and to a method of operating a magnetic mirror machine.

Background

Great efforts are being made to design a reactor for controlled fusion on earth. The most promising fusion process is between the hydrogen isotopes deuterium ($^2$H) and tritium ($^3$H). In the deuterium-tritium fusion presses, a $^4$He alpha particle, having a kinetic energy of about 3.5 MeV and a neutron, having a kinetic energy of about 14.1 MeV, are created.

For fusion to occur, nuclei must be in the form of a plasma having a temperature in the order of 150 million kelvins. Providing confinement for such a plasma remains a major challenge.

Plasma confinement involves confining the charged particles of the plasma. There are several different known magnetic configurations for plasma confinement. A well-known class of designs are magnetic mirror machines. Therein, particles follow magnetic field lines through the magnetic mirror machine, and are reflected in areas of increasing magnetic flux density at peripheral areas of the device

One configuration for a magnetic mirror machine known in the prior art is a linear bottle configuration. Another configuration for a magnetic mirror machine known in the prior art is the Biconic cusp, wherein a first coil is arranged to carry a current in a first direction and a second coil arranged to carry a current in a second direction opposite to the first direction and wherein the first coil and the second coil are and longitudinally displaced in the device. The thus formed two parallel electromagnets with currents running in opposite directions create oppositely-directed electromagnetic fields, wherein the two fields may interact to form between the coils a plasma confinement area.

There is always a need to improve such devices.

Summary

It is an object of the present disclosure to solve, or at least mitigate, the above problem.

To this end, according to a first aspect, there is provided a magnetic mirror machine, comprising a first inner coil arranged to carry a current in a first direction; and a second inner coil offset in an axial direction from said first inner coil and arranged to carry a current in a second direction opposite to said first direction, wherein said plasma confinement device further comprises a first outer coil located radially outside said first inner coil and arranged to carry a current in said second direction; and

a second outer coil located radially outside said second inner coil and arranged to carry a current in said first direction.

Thus, compared to the Biconic cusp as known in the prior art, the present invention adds the first outer coil located radially outside the first inner coil, and the second outer coil located radially outside the second inner coil.

Additional to the central plasma confinement area located at the center of the plasma confinement device, this allows for a further, outer, annular plasma confinement area to be created, having similar magnetic field properties to the central plasma confinement area, wherein the annular plasma confinement area is located radially outside the central plasma confinement area. Due to the annular geometry, the outer plasma confinement area may allow for a considerably larger confined plasma volume to be achieved at a given magnetic mass, as compared the central plasma confinement area with a compact geometry of the Biconic cusp. Further, this configuration allows for the outer plasma confinement area to present concave field lines as seen from outside the outer plasma confinement area, as known to be associated with magneto-hydrodynamic stability of the confined plasma.

According to another aspect, there is provided a fusion reactor comprising the magnetic mirror machine of the first aspect. This aspect may generally present the same features and advantages as the first aspect.

According to another aspect, there is provided use of the magnetic mirror machine of the first aspect in a fusion reactor. This aspect may generally present the same features and advantages as the first aspect.

According to another aspect, there is provided a method of operating a magnetic mirror machine, comprising a first inner coil of said magnetic mirror machine carrying a current in a first direction; and a second inner coil of said magnetic mirror machine, offset in an axial direction from said first inner coil, carrying a current in a second direction opposite to said first direction; a first outer coil of said magnetic mirror machine, located radially outside said first inner coil, carrying a current in said second direction; and a second outer coil of said magnetic mirror machine, located radially outside said second inner coil, carrying a current in said first direction. This aspect may generally present the same features and advantages as the first aspect.

The method may be performed for confining a plasma.

The method may be performed in a fusion reactor.

Brief description of the drawings

The above, as well as additional objects, features and advantages of the present disclosure, will be better understood through the following illustrative and non-limiting detailed description of preferred embodiments, with reference to the appended drawings, where the same reference numerals will be used for similar elements, wherein:

Fig. 1 is a planar cross-sectional view of a magnetic mirror machine with a Biconic cusp configuration.
Fig. 2 is a planar cross-sectional view of a magnetic mirror machine.

Detailed description

As is generally known, plasma confinement devices may be based either on open magnetic field lines or closed field lines.

A closed-field-line configuration may, for example, be realized with a toroidal magnetic field. An example of such a device is a tokamak.

Open-field-line plasma confinement devices, as known per se in the prior art, may operate by a principle of magnetic mirroring, wherein the charged particles of the plasma are reflected in areas of increasing magnetic flux density in peripheral regions of the confinement area.

A magnetic mirror machine may be a linear magnetic mirror machine with a first mirror area located at the first end of the magnetic mirror machine and a second mirror area located at the second end of the linear magnetic mirror machine. Alternatively, magnetic mirror machines with more elaborate configurations with more than two mirror areas are equally possible, such as in the case of a Biconic cusp, or in the case of the present inventive concept, as will be elaborated upon further below.

While recognized to be able to provide plasma confinement, open-field-line plasma confinement devices will always have leakage of charge particles with velocity vectors sufficiently aligned with the magnetic field lines. More specifically, the mirror effect will occur for all particles within a range of angles of approach outside a loss cone defined by the helix spiral pitch angle of the charged particle's gyration spin around the magnetic field lines.

The extent of the loss cone is determined by the mirror ratio $r_{mirror}$, defined as the ratio between the maximum magnetic flux density at the mirror area $B_{mirror}$ and the minimum magnetic flux density $B_{central}$ in a central area of the plasma confinement area, following a magnetic field line:

$$r_{\mathrm{mirror}} = \frac{B_{\mathrm{mirror}}}{B_{\mathrm{central}}}.$$

The angle defining the loss cone is then:

$$\alpha_{\mathrm{cone}} = \arccos \frac{1}{\sqrt{r_{\mathrm{mirror}}}}.$$

Thus, it can be seen that high mirror ratio will lead to a small loss cone, so that only the particle having velocities the most aligned with the field lines will escape. Conversely, a low mirror ratio will lead to a larger loss cone.

A property, known from literature, of the magnetic field lines of a plasma confinement device, associated with magneto-hydrodynamic stability of the confined plasma, is a concave magnetic field, i.e., a magnetic field having concave magnetic field lines, as seen from outside the plasma confinement area and the confined plasma.

Throughout this disclosure references will be made to figures showing simulated magnetic field lines, i.e., equal magnetic potential lines.

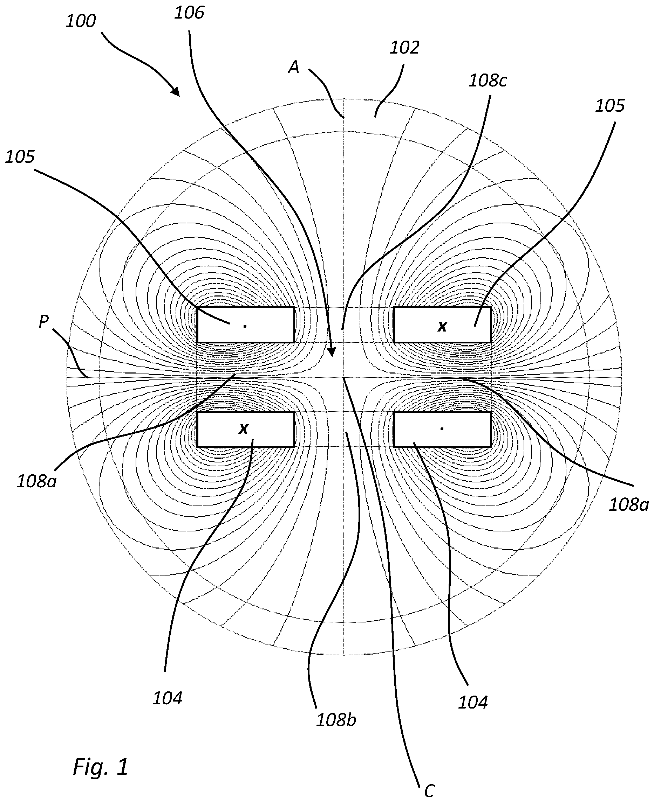

Presented as an example useful for understanding the present inventive concept, Fig. 1 is a planar cross-sectional view of a magnetic mirror machine 100 with a Biconic cusp configuration. In the example of Fig. 1, the magnetic mirror machine 100 is rotationally symmetric, or at least substantially rotationally symmetric, around a symmetry axis A lying in the plane of Fig. 1.

The magnetic mirror machine 100 may be used for plasma confinement, and may comprise customary shielding and/or a plasma vessel 102, as known in the art. The shielding may comprise neutron shielding, as known per se. In particular, the magnetic mirror machine 100 may be comprised in a fusion reactor and/or used in a fusion reactor.

As evident from Fig. 1, the magnetic mirror machine 100 comprises a plurality of electromagnetic coils, viz., two electromagnetic coils 104, 105. Each electromagnetic coil 104, 105 may be arranged in a circular loop, as in Fig. 1, and may be arranged for carrying a respective direct current, the direction of which being conventionally indicated using respective a dot or cross in Fig. 1.

In particular, the plurality of electromagnetic coils 104, 105 of the magnetic mirror machine 100 comprises a first coil 104 arranged to carry a current in a first direction a second coil offset in an axial direction from the first coil 105 and arranged to carry a current in a second direction opposite to the first direction, as conventionally marked with dots and crosses in Fig. 1.

In the configuration of Fig. 1, as is evident from that figure, the plurality of electromagnetic coils 104, 105 may be disposed co-axially, in the example of Fig. 1 with respect to a symmetry axis A. Further, the coils 104, 105 may be longitudinally spaced with respect to the symmetry axis A.

As know per se in the art, a Biconic cusp electromagnetic coil configuration, as exemplified by the magnetic mirror machine 100, of Fig. 1 allows for the creation of a plasma confinement area 106 located at the center of the plasma confinement device 100.

The magnetic field configuration of Fig. 1 has no toroidal component, i.e., no magnetic field component normal to the cross-sectional plane of the figure.

As is evident from Fig. 1, the plasma confinement area 106 is limited by respective mirror areas 108a, b,c of increased magnetic flux density relative to an area around the center C of the magnetic mirror machine, as is evident from the magnetic field line spacing in each mirror area 108a,b,c, as compared to the area around the center C, and as known per se in the art. In other words, each respective mirror area 108a,b,c comprises converging magnetic field lines as approached from the area around the center C of the magnetic mirror machine 100. In particular, the Biconic cusp magnetic field configuration of the magnetic mirror machine 100 of Fig. 1, there are more than two mirror areas 108a,b,c, viz., three mirror areas 108a,b,c.

A first mirror area 108a is formed between the first coil 104 and the second coil 105, at an outer radial periphery of the plasma confinement area 106. The field lines at the first mirror area 108a thus extend in a radial direction of the magnetic mirror machine 100, i.e., perpendicularly the symmetry axis A.

A second mirror area 108b is formed radially inside the first coil 104 at an axially lower periphery of the plasma confinement area 106. In other words, the first coil 104 is located radially outside the second mirror area 108b. The field lines at the second mirror area 108b thus generally extend in a longitudinal direction of the magnetic mirror machine 100, i.e., along the symmetry axis A.

A third mirror area 108c is formed radially inside the second coil 105 at an axially upper periphery of the plasma confinement area 106. In other words, the second coil 105 is located radially outside the third mirror area 108c. The field lines at the third mirror area 108c thus generally extend in a longitudinal direction of the magnetic mirror machine 100, i.e., along the symmetry axis A.

The plasma confinement area 106 thus has a compact topology, thus having no holes, around a center point C of the magnetic mirror machine 100. In the example of Fig. 1, the plasma confinement area has rotational symmetry around the symmetry axis A.

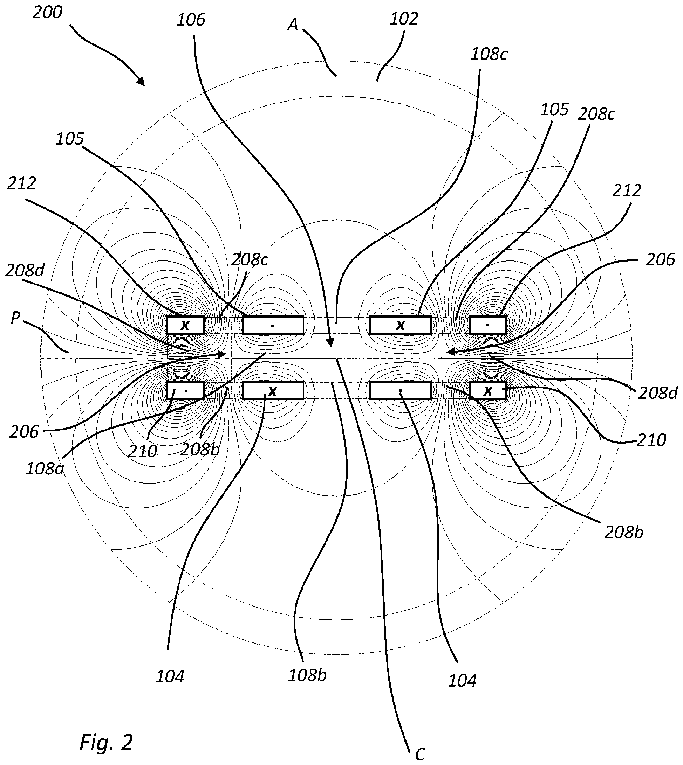

Fig. 2 is a planar cross-sectional view of a magnetic mirror machine 200. In the example of Fig. 2, the magnetic mirror machine 200 is rotationally symmetric, or at least substantially rotationally symmetric, around a symmetry axis A lying in the plane of Fig. 2.

The magnetic mirror machine 200 may be used for plasma confinement, and may comprise customary shielding and/or a plasma vessel 102, as known in the art. The shielding may comprise neutron shielding, as known per se. In particular, the magnetic mirror machine 200 may be comprised in a fusion reactor and/or used in a fusion reactor.

As evident from Fig. 2, the magnetic mirror machine 200 comprises a plurality of electromagnetic coils 104, 105, 210, 212, viz, four electromagnetic coils 104, 105, 210, 212. Each electromagnetic coil 104, 105, 210, 212 may be arranged in a circular loop, as in Fig. 2, and may be arranged for carrying a respective direct current, the direction of which being conventionally indicated using respective a dot or cross in Fig. 2.

As with the magnetic mirror machine 100 of Fig. 1 with the Biconic cusp magnetic field configuration, the magnetic mirror machine 200 of Fig. 2 comprises a first inner coil 104 arranged to carry a current in a first direction and a second inner coil offset in an axial direction from the first inner coil 105 and arranged to carry a current in a second direction opposite to the first direction.

The magnetic field configuration of Fig. 2 has no toroidal component, i.e., no magnetic field component normal to the cross-sectional plane of the figure.

In the configuration of Fig. 2, as is evident from that figure, the first inner coil 104 and the second inner coil 105 may be disposed co-axially, in the example of with respect to a symmetry axis A.

Further to the configuration of the magnetic mirror machine 100 of Fig. 1, the magnetic mirror machine 200 comprises a first outer coil 210 and a second outer coil 212.

The first outer coil 210 is located radially outside the first inner coil 104 with respect to the symmetry axis A. The first inner coil 104 and the first outer coil 210 are thus concentrically arranged.

The first outer coil 210 is arranged to carry a current in the second direction, i.e., the same direction as that of the current carried by the second inner coil 105.

The second outer coil 212 is located radially outside the second inner coil 105 with respect to the symmetry axis A. The second inner coil 105 and the second outer coil 212 are thus concentrically arranged.

The second outer coil 212 is arranged to carry a current in the second direction, i.e., the same direction as that of the current carried by the first inner coil 104.

For example, the respective absolute value of the respective currents carried by each of the first inner coil 104, the second 105 inner coil, the first outer coil 210, and the second outer coil 212 may be equal. Alternatively, two or more coils may carry currents having unequal absolute values.

Just as for the Biconic cusp electromagnetic coil configuration of Fig. 1, the coil arrangement of the magnetic mirror machine 200 of Fig. 2 allows for the arranging of a central plasma confinement area 106 located at the center C of the plasma confinement device 100.

As is evident from Fig. 2, the plasma central confinement area 106, just as in the Biconic cusp configuration of Fig. 1, is limited by respective mirror areas 108a,b,c of increased magnetic flux density relative to an area around the center C of the magnetic mirror machine 200, as is evident from the magnetic field line spacing in each mirror area 108a,b,c and the area around the center C of the magnetic mirror machine. In other words, each respective mirror area 108a,b,c comprises converging magnetic field lines, as approached from the center C of the magnetic mirror machine 200. In particular, the central plasma confinement area has more than two mirror areas, viz., three mirror areas 108a,b,c.

As evident from Fig. 2, the second inner coil 105 and the second outer coil 210 may be arranged with mirror symmetry at the symmetry plane P with respect to the first inner coil 104 and the first outer coil 212.

A first mirror area 108a of the central plasma confinement area 106 is formed between the first inner coil 104 and the second inner coil 105, at an outer radial periphery of the central plasma confinement area 106. The field lines at the first mirror area 108a thus generally extend in a radial direction of the magnetic mirror machine 200, i.e., perpendicularly to the symmetry axis A.

A second mirror area 108b of the central plasma confinement area 106 is formed radially inside the first inner coil 104 at an axially lower periphery of the central plasma confinement area 106. In other words, the first inner coil 104 is located radially outside the second mirror area 108b. The field lines at the second mirror area 108b thus generally extend in a longitudinal direction of the magnetic mirror machine 200, i.e., along the symmetry axis A.

A third mirror area 108c of the central plasma confinement area 106 is formed radially inside the second inner coil 105 at an axially upper periphery of the plasma confinement area 106. The field lines at the third mirror area 108c thus generally extend in a longitudinal direction of the magnetic mirror machine 200, i.e., along the symmetry axis A.

The central plasma confinement area 106 thus has a compact topology, thus having no holes, around a center point C of the magnetic mirror machine 200. The plasma confinement area has rotational symmetry around the symmetry axis A.

Further to the central plasma confinement area 106, and different form the Biconic cusp configuration of the magnetic mirror machine 100 of Fig. 1, the coil arrangement of the magnetic mirror machine 200 of Fig. 2 allows for the arranging of a further plasma confinement area in the form of an outer plasma confinement area 206, the outer plasma confinement area 206 having an annular topology.

As is evident from Fig. 2, the outer plasma confinement area 206, is limited by respective mirror areas 108a, 208b,c,d of increased magnetic flux density relative to a central area of the outer plasma confinement area 206, as is evident from the magnetic field line spacing in each mirror area 108a, 208b,c,d and the central area of the outer plasma confinement area 206. The central area of the plasma confinement area 206 is axially located between, on the one hand, the first inner coil 104 and the first outer coil 210, and, on the other hand, the second inner coil 105 and the second outer coil 212. The central area of the outer plasma confinement area 206 is radially located between, on the one hand, the first inner coil 104 and the second inner coil 105, and, on the other hand, the first outer coil 210 and the second outer coil 212.

In other words, each respective mirror area 108a, 208b,c,d of the outer plasma confinement area 206 comprises converging magnetic field lines. In particular, the outer plasma confinement area 206 has more than two mirror areas, viz., four mirror areas 108a, 208b,c,d.

A first mirror area 108a of the outer plasma confinement area 206 is identical to the first mirror area 108a of the central plasma confinement area 106 and is formed between the first inner coil 104 and the second inner coil 105, at an inner radial periphery of the outer plasma confinement area 206. The field lines at the first mirror area 108a thus generally extend in a radial direction of the magnetic mirror machine 200, i.e., perpendicularly to the symmetry axis A.

A second mirror area 208d of the outer plasma confinement area 206 is formed between the first outer coil 210 and the second outer coil 212, at an outer radial periphery of the outer plasma confinement area 206. The field lines at the second mirror area 108d thus generally extend in a radial direction of the magnetic mirror machine 200, i.e., perpendicularly to the symmetry axis A.

A third mirror area 208b of the outer plasma confinement area 206 is formed radially between the first inner coil 104 and the first outer coil 210 at an axially lower periphery of the outer plasma confinement area 206. The field lines at the third mirror area 208c thus generally extend in a longitudinal direction of the magnetic mirror machine 200, i.e., in parallel to the symmetry axis A.

A fourth mirror area 208c of the outer plasma confinement area 206 is formed radially between the second inner coil 105 and the second outer coil 212 at an axially upper periphery of the outer plasma confinement area 206. The field lines at the fourth mirror area 208c thus generally extend in a longitudinal direction of the magnetic mirror machine 200, i.e., in parallel to the symmetry axis A.

The outer plasma confinement area 206 thus has an annular, i.e., donut-shaped topology, i.e., having a hole, radially outside the symmetry axis A. The outer plasma confinement area 206 has rotational symmetry around the symmetry axis A.

As evident from Fig. 2, the central plasma confinement area 106 and the outer plasma confinement area 206 may present concave magnetic field lines as seen from outside the respective plasma confinement area, as associated with magneto-hydrodynamic stability of the confined plasma.

Typical dimensions of the magnetic mirror machine 200 of Fig. 2 may be as follows.

The distance between the first inner coil 104 and the second inner coil 105, and the distance between the first outer coil 210 and the second outer coil 212 may be in the range 1-2 m, and preferably be about 2.2 m.

The first inner coil 104, the first outer coil 210, the second inner coil 105, and the second outer coil 212 may have a height in the range 1-2 m, and preferably of about 1.1 m.

The first inner coil 104 and the second inner coil 105 may each have an inner radius in the range 1-2, and preferably about 2.2 m.

The first inner coil 104 and the second inner coil 105 may each have an outer radius in the range 3-7 m, and preferably about 6.2 m.

The first outer coil 210 and the second outer coil 212 may each have an inner radius in the range 5-10 m, and preferably about 8.65 m.

The first outer coil 210 and the second outer coil 212 may each have an outer radius in the range 8-20 m, and preferably about 11.1 m.

Each electromagnetic coil throughout this disclosure may be manufactured and arranged using methods, materials, compounds, and the like, known per se in the art, for example using, copper, or some other suitable metal as conductor.

Alternatively, each electromagnetic coil may be a superconductor coil. Suitable superconductor materials may include YBCO, Bi2223, 2212, Nb3SN, NbTi, MgB2, and/or ReBCO. The electromagnetic coils throughout this disclosure may, for example, be so-called high-temperature superconductor coils.

As known in the art, a superconductor coil may comprise internal structure. For example, within each superconductor coil, superconducting material may be arranged in filaments, strands, cables, ropes, or the like. using methods generally known in the art. The cross-section of the coil, as referred to throughout this disclosure, should then be understood as an enclosing envelope of this internal structure.

For example, the superconductor coils throughout this disclosure may be manufactured and arranged using methods, materials, compounds, and the like, as detailed in D Uglietti: A review of commercial high temperature superconducting materials for large magnets: from wires and tapes to cables and conductors, Supercond. Sci. Technol. 32 (2019) 053001 (29pp), https://doi.org/10.1088/1361-6668/ab06a2, incorporated herein by reference.

Further, the superconductor coils may be cooled using methods generally known per se in the art.

In one-particle simulations, confinement at the central plasma confinement area 106 and the outer plasma confinement area 206 of the magnetic mirror machine 200 of Fig. 2 was shown to exhibit similar confinement performance as the plasma confinement area 106 of the magnetic mirror machine 100 with the Biconic cusp configuration of Fig. 1, while providing a considerably larger plasma confinement volume, in the present example about 16 times larger achievable with the same magnetic mass.

Physical dimensions of the magnetic mirror machine 200 may depend on many parameters such as engineering current density in the magnetic coils, the degree of confinement of alpha particles, the desired plasma volume, etc..

The inventive concept has mainly been described above with reference to example embodiments. However, as is readily appreciated by a person skilled in the art, other embodiments than the ones disclosed above are equally possible within the scope of the inventive concept, as defined by the appended patent claims.

**Claims**

1. A magnetic mirror machine (200), comprising:

   a first inner coil (104) arranged to carry a current in a first direction; and
   a second inner coil (105) offset in an axial direction from said first inner coil (104) and arranged to carry a current in a second direction opposite to said first direction,

   the magnetic mirror machine (200) further comprising:

   a first outer coil (210) located radially outside said first inner coil (104) and arranged to carry a current in said second direction; and
   a second outer coil (212) located radially outside said second inner coil (105) and arranged to carry a current in said first direction.

2. A fusion reactor comprising the magnetic mirror machine (200) of claim 1.

3. Use of the magnetic mirror machine (200) of claim 1 for confining a plasma.

4. Use of the magnetic mirror machine (200) of claim 1 in a fusion reactor.

5. A method of operating a magnetic mirror machine (200), comprising:

   a first inner coil (104) of said magnetic mirror machine carrying a current in a first direction;
   a second inner coil (105) of said magnetic mirror machine, offset in an axial direction from said first inner coil, carrying a current in a second direction opposite to said first direction;
   a first outer coil (210) of said magnetic mirror machine, located radially outside said first inner coil (104), carrying a current in said second direction; and
   a second outer coil (212) of said magnetic mirror machine, located radially outside said second inner coil (105), carrying a current in said first direction.

6. The method of claim 5, wherein said method is performed for confining a plasma.

7. The method of any one of claims 5-6, wherein said method is performed in a fusion reactor.

Fig. 1

Fig. 2

Europäisches
Patentamt

European
Patent Office

Office européen
des brevets

# EUROPEAN SEARCH REPORT

Application Number

EP 22 21 7136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/367069 A1 (JÄDERBERG JAN [SE]) 17 November 2022 (2022-11-17) * abstract; figures 1-5 * * paragraphs [0067] - [0071], [0078] - [0080], [0094] - [0097] * ----- | 1-7 | INV. G21B1/05 G21B1/11 H05H1/11 ADD. H01F6/06 |
| A | US 11 107 592 B2 (PRATER DANIEL [US]) 31 August 2021 (2021-08-31) * abstract; figures 6-8 * * column 3, lines 40-53 * * column 8, lines 17-37 * ----- | 1-7 | |

TECHNICAL FIELDS SEARCHED (IPC)

G21B
H05H
H01F

The present search report has been drawn up for all claims

| Place of search | Date of completion of the search | Examiner |
|---|---|---|
| Munich | 16 May 2023 | Manini, Adriano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 21 7136**

This annex lists the patent family members relating to the patent documents cited in the above-mentioned European search report.
The members are as contained in the European Patent Office EDP file on
The European Patent Office is in no way liable for these particulars which are merely given for the purpose of information.

**16-05-2023**

| Patent document cited in search report | | Publication date | Patent family member(s) | | Publication date |
|---|---|---|---|---|---|
| US 2022367069 | A1 | 17-11-2022 | BR 112022008006 | A2 | 12-07-2022 |
| | | | CA 3160621 | A1 | 20-05-2021 |
| | | | CA 3180392 | A1 | 19-05-2022 |
| | | | CN 114667575 | A | 24-06-2022 |
| | | | CN 115867985 | A | 28-03-2023 |
| | | | EP 3819913 | A1 | 12-05-2021 |
| | | | EP 4059029 | A1 | 21-09-2022 |
| | | | JP 2023502173 | A | 20-01-2023 |
| | | | KR 20220092897 | A | 04-07-2022 |
| | | | KR 20230011431 | A | 20-01-2023 |
| | | | US 2022367069 | A1 | 17-11-2022 |
| | | | WO 2021094372 | A1 | 20-05-2021 |
| | | | WO 2022101356 | A1 | 19-05-2022 |
| US 11107592 | B2 | 31-08-2021 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D UGLIETTI.** A review of commercial high temperature superconducting materials for large magnets: from wires and tapes to cables and conductors. *Supercond. Sci. Technol.,* 2019, vol. 32, 29, https://doi.org/10.1088/1361-6668/ab06a2